# EUROPÄISCHE PATENTSCHRIFT

(11) **EP 2 401 104 B1**
(45) Veröffentlichungstag und Bekanntmachung des Hinweises auf die Patenterteilung: **27.03.2013**
(21) Anmeldenummer: 10714853.8
(22) Anmeldetag: 24.02.2010
(51) Int. Cl.: B23B 29/034

(54) **EINRICHTUNG ZUR BEARBEITUNG VON WERKSTÜCKEN**
DEVICE FOR MACHINING WORKPIECES
DISPOSITIF D'USINAGE DE PIÈCES

(30) Priorität: 25.02.2009 DE 202009002616 U
(43) Veröffentlichungstag der Anmeldung: 04.01.2012
(73) Patentinhaber: Heckert GmbH, 09117 Chemnitz (DE)
(72) Erfinder: PÖNISCH, Achim, 09573 Augustusburg (DE); SCHLIEDER, Daniel, 09116 Chemnitz (DE)
(74) Vertreter: Rumrich, Gabriele
(86) Internationale Anmeldenummer: PCT/DE2010/075018
(87) Internationale Veröffentlichungsnummer: WO 2010/097083

(56) Entgegenhaltungen:
- DE-A1- 2 209 031
- DE-A1- 2 737 281
- DE-U1- 29 622 645
- DE-U1-202007 013 125
- JP-A- 58 051 008
- JP-A- 61 056 804
- US-A- 2 476 255
- US-A1- 2005 204 879

## Beschreibung

Die Erfindung bezieht sich auf eine Einrichtung zur Bearbeitung von Werkstücken, wobei eine um eine Drehachse antreibbare Planscheibe sowie an dieser angeordnete Planschlitten vorgesehen sind.
Aus DE 39 41 783 C2 ist eine Maschine zum Zirkularfräsen runder Konturen bekannt, die einen radial auf den Durchmesser des Werkstücks einstellbaren Frässpindelträger oder mehrere Frässpindelträger aufweist, die über einen Zahnradantrieb und Planetenzahnräder antreibbar sind. Insbesondere sind zwei Fräser an waagerechten Spindeln befestigt. Die beiden Spindeln sind in einem Gleitstein gelagert, der radial verschiebbar in Radialführungen angeordnet ist, wodurch die Fräser auch während der Bearbeitung radial zueinander verstellbar sind und es somit möglich ist, auch unrunde Rohre zu bearbeiten. Dazu wird eine berührungslose Tastung vorgesehen. Diese Lösung ist konstruktiv aufwendig. Auch wird beim Zirkularfräsen das Werkzeug auf einer Helixbahn geführt. Problematisch sind dabei die Stellen der Bahn, an denen eine Achse ihre Richtung ändert (Quadrantenübergänge). Dadurch bleibt die Achse kurz stehen und weicht von der vorgegebenen Helixbahn ab, wodurch hohe Qualitätsanforderungen nicht erfüllt werden können.

Die GB 2 232 101 A (DE 39 18 118 A1) beschreibt einen Plandrehkopf zur Bearbeitung planer Flächen mit zwei Schiebern, die in einer Radialebene nebeneinander liegend angeordnet sind und bei einer Werkzeugverstellung zum Wuchtausgleich gleichzeitig und gegensinnig zueinander bewegt werden. Die Schieber sind als zwei parallele Verbindungslenker (Koppeln) zwischen zwei doppelarmigen Kurbeln eines Parallelkurbelgetriebes ausgebildet. Bei einer Werkzeugverstellung beschreiben daher die Schieber einen Teil einer kreisförmigen Bahn, während sie ihre parallele Lage zueinander behalten. Die Bewegung der Schieber ist nur in einem eingeschränkten Maß und voneinander abhängig möglich. Eine Bearbeitung von Außen- und Innendurchmessern kann mit dieser Lösung nicht durchgeführt werden.

Weiterhin weisen bekannte Lösungen den Nachteil auf, dass keine sehr großen Durchmesserbereiche bearbeitbar sind.

Die US 2,476,255 offenbart eine Einrichtung zur Bearbeitung von Werkstüken gemäß dem Oberbegriff des Anspruchs 1.

Aufgabe der Erfindung ist es, eine Einrichtung zur Bearbeitung von Werkstücken zu entwickeln, welche flexibel einsetzbar ist, einen einfachen konstruktiven Aufbau aufweist und eine hohe Qualität der bearbeiteten Oberfläche gewährleistet.
Diese Aufgabe wird mit den Merkmalen des ersten Patentanspruchs gelöst. Vorteilhafte Ausgestaltungen ergeben sich aus den Unteransprüchen.

Die Einrichtung zur Bearbeitung von Werkstücken weist eine um eine Drehachse antreibbare Planscheibe auf, die entlang der Drehachse linear bewegbar ist, wobei die Drehachse als Hohlachse ausgebildet ist, auf deren Außendurchmesser die Planscheibe drehbar gelagert ist, und an der Planscheibe zwei jeweils senkrecht zu der Drehachse radial nach außen und innen verschiebbare Planschlitten vorgesehen sind, wobei die Planscheibe von einem ersten Antrieb und die Planschlitten von einem gemeinsamen zweiten Antrieb antreibbar sind.
Der Antrieb der Planschlitten und die Planscheibe weisen dabei eine relative Drehbeweglichkeit zueinander auf.
Die Planscheibe ist von einem ersten Torque-Motor und die Planschlitten sind von einem zweiten Torque-Motor antreibbar, wobei die beiden Torque-Motoren auf einer gemeinsamen Achse angeordnet sind. Über eine zwischen der Drehzahl des Antriebs der Planscheibe und der Drehzahl des Antriebs der Planschlitten bestehende Differenz ist eine Verstellung der Planschlitten erzielbar.
Beide Planschlitten sind parallel und zueinander entgegengesetzt radial verstellbar gelagert.

Das an den Planschlitten angeordnete erste und/oder zweite und/oder dritte und/oder vierte Werkzeug ist bevorzugt so befestigt, dass eine gedachte Verbindungslinie zwischen dem ersten und dritten Werkzeug bzw. eine gedachte Verbindungslinie zwischen dem zweiten und vierten Werkzeug durch die Drehachse führt. Die Werkzeuge sind somit in einer senkrechten Linie zur Drehachse angeordnet, wodurch deren einfache radiale Verstellung entsprechend dem zu bearbeitenden Durchmesser möglich ist und eine Verstellung in Abhängigkeit von einer Winkelfunktion entfallen kann.
Dazu weisen die beiden Planschlitten einen zueinander parallelen Führungsbereich auf, wobei vom Führungsbereich des ersten Planschlittens in Richtung zum zweiten Planschlitten ein abgewinkelter Arm reicht, an dem das erste und/oder zweite Werkzeug aufgenommen ist/sind. Weiterhin reicht vom Führungsbereich des zweiten Planschlittens in Richtung zum ersten Planschlitten ein abgewinkelter Arm, an dem das dritte und/oder vierte Werkzeug befestigt ist/sind. Bevorzugt sind das erste und das dritte Werkzeug radial außen und das zweite und das vierte Werkzeug radial innen befestigbar.

Die Planscheibe weist einen mittigen Durchbruch auf, in dem ein Querschieber mit seiner Arbeitsspindel in der W-Achse linear bewegbar aufgenommen ist.
Die U-Achsen der beiden Planschlitten liegen dabei außerhalb der Drehachse der Planscheibe und außerhalb des Querschiebers, so dass ein großer Verstellweg gewährleistet ist.

Zur Bestimmung des Durchmessers und/oder der Durchmessermitte des Werkstücks weist die Einrichtung bzw. der Querschieber eine entsprechende Messeinrichtung auf bzw. ist eine Messeinrichtung einwechselbar.

Bevorzugt ist die Einrichtung an einem Ständer eines Waagerecht-Bearbeitungszentrums in einer Y-Achse vertikal verschiebbar angeordnet, wobei die Rotationsachse horizontal und parallel zu einer Z-Achse eines Z-Bettes ausgerichtet und mit dem Ständer entlang der Z-Achse auf dem Z-Bett verschiebbar ist.
Die Arbeitsspindel des Waagerecht-Bearbeitungszentrums ragt mit ihrem Querschieber durch die Planscheibe, wobei die Achse der Arbeitsspindel in der W-Achse der Planscheibe liegt.

Vorteilhafter Weise besitzen die Planscheibe und die Arbeitsspindel separate Antriebe. Weiterhin ist die Arbeitsspindel in der Planscheibe relativ zu dieser entlang der W-Achse bewegbar. Dadurch kann die Arbeitsspindel für eine Fräsbearbeitung des Werkstücks bis über die Planscheibe in Richtung zum Werkstück bewegt werden, wobei die Fräsbearbeitung vorzugsweise bei stehender Planscheibe erfolgt.

In einer bevorzugten Ausführung der Erfindung sind die am ersten und/oder zweiten Planschieber befestigten Werkzeuge gemeinsam mit an der Arbeitsspindel aufgenommenen Fräswerkzeugen mittels eines automatischen Werkzeugwechslers wechselbar, wodurch der Werkzeugwechsel sehr effektiv gestaltet werden kann.

Durch die Verwendung von zwei parallel zueinander angeordneten Planschlitten, die außerhalb der W-Achse in U-Achsen verstellbar sind, kann ein sehr großer Durchmesserbereich (z.B. 400 bis 2800 mm) bearbeitet werden. Eine Verstellbarkeit der Schlitten während der Bearbeitung ermöglicht die Bearbeitung unrunder Konturen.
Mit an den abgewinkelten Armen der Planschlitten radial außen angeordneten ersten und dritten Werkzeugen (Drehmeißeln) werden je nach Ausbildung und Einspannung der Werkzeuge (ggf. Umspannen der Werkzeuge) Außen- oder Innenkonturen bearbeitet. Mit radial innen an den Armen angeordneten zweiten und vierten Werkzeugen (Drehmeißeln) ist ebenfalls die Bearbeitung der Außenkontur und mit einem umgespannten Werkzeug bzw. einem entsprechend ausgebildeten Werkzeug die Bearbeitung der Innenkontur eines Werkstückes möglich. Außerdem ist die Einrichtung zur Bearbeitung von konzentrischen und nichtkonzentrischen Planflächen einsetzbar. Dabei können die Werkzeuge zur Gewährleistung entsprechender Bearbeitungslängen entsprechend lange Schäfte aufweisen.

Neben der Möglichkeit der Bearbeitung eines großen Durchmesserbereiches können durch die lineare Verstellbarkeit der Einrichtung entlang der Z-Achse mittels des Ständers, ggf. in Verbindung mit Werkzeugen, die einen langen Schaft aufweisen, auch lange Innen- und Außendurchmesser bearbeitet werden. Mit dem erfindungsgemäßen Werkzeug wird insgesamt eine einfache und flexible Möglichkeit zur Bearbeitung von gekrümmten Außen- und Innenkonturen sowie von Planflächen in hoher Qualität geschaffen.

Die Erfindung wird nachfolgend anhand eines Ausführungsbeispiels und zugehörigen Zeichnungen näher erläutert.
Es zeigen:
- Fig. 1: eine dreidimensionale Darstellung einer erfindungsgemäßen Einrichtung in Ausgangsstellung mit radial innen stehenden Planschlitten,
- Fig. 2: eine dreidimensionale Darstellung einer Einrichtung mit radial in eine äußere Endstellung ausgefahrenen Planschlitten,
- Fig. 3: eine dreidimensionale Darstellung einer Einrichtung ohne Planschlitten, aber mit Antriebsmitteln,
- Fig. 4: eine dreidimensionale Darstellung einer Einrichtung bei der Bearbeitung von kleinen Innendurchmessern,
- Fig. 5: eine dreidimensionale Darstellung einer Einrichtung bei der Bearbeitung von großen Innendurchmessern,
- Fig. 6: eine dreidimensionale Darstellung einer Einrichtung bei der Bearbeitung von kleinen Außendurchmessern,
- Fig. 7: eine dreidimensionale Darstellung einer Einrichtung bei der Bearbeitung von großen Außendurchmessern,
- Fig. 8: eine dreidimensionale Darstellung einer Einrichtung bei der konzentrischen Bearbeitung kleiner Planflächen,
- Fig. 9: eine dreidimensionale Darstellung einer Einrichtung bei der konzentrischen Bearbeitung großer Planflächen,
- Fig. 10: eine dreidimensionale Darstellung einer Einrichtung beim Planfräsen großer Flächen,
- Fig. 11: eine dreidimensionale Darstellung eines Waagerecht-Bearbeitungszentrum mit einer erfindungsgemäßen Einrichtung, die an dem Ständer des Waagerecht-Bearbeitungszentrums angeordnet ist,
- Fig. 12: eine Seitenansicht eines Bearbeitungszentrums mit einer Einrichtung zur Bearbeitung eines großen Innendurchmessers,
- Fig. 13: eine Seitenansicht eines Bearbeitungszentrums mit einer Einrichtung zur Bearbeitung eines kleinen Innendurchmessers,
- Fig. 14: eine Seitenansicht eines Bearbeitungszentrums mit einer Einrichtung zur Bearbeitung eines Außendurchmessers.

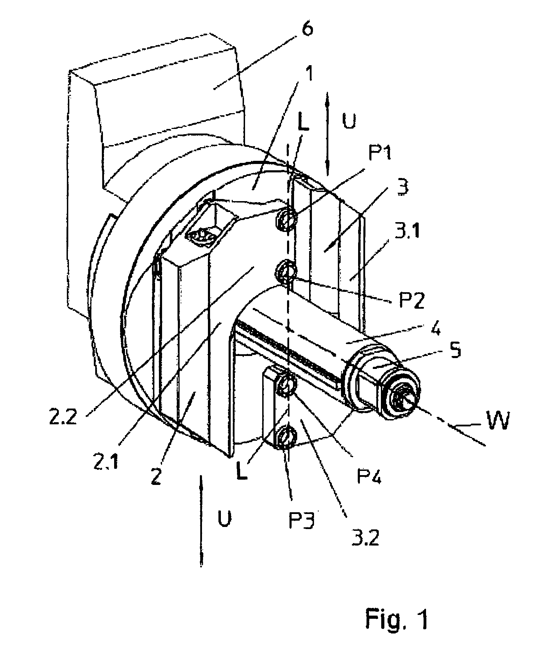

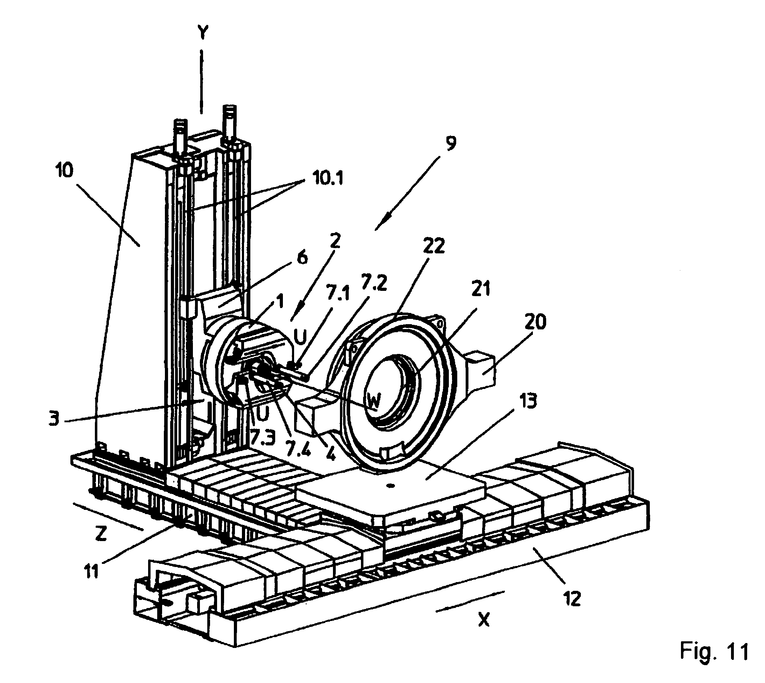

In Fig. 1 wird eine erfindungsgemäße Einrichtung mit einer Planscheibe 1, an welcher ein erster Planschlitten 2 und ein zweiter Planschlitten 3 angeordnet sind, die sich in einer radial nach innen gefahrenen Endposition befinden, dargestellt. Die lineare und zueinander parallele Verstellbarkeit der Planschlitten 2 und 3 in Längsachsen U wird über hier nicht dargestellte Linearführungen realisiert. Die Planscheibe 1 ist um eine Drehachse W drehbar und mittels eines Ständers (s. Fig.11) entlang einer Z-Achse Z, zu der die Drehachse W parallel verläuft, linear verschiebbar. Durch die Planscheibe 1 und den Querschieber 4 ragt die Arbeitsspindel 5 eines in Fig. 1 nicht dargestellten Waagerecht-Bearbeitungszentrums. Die Befestigung der Planscheibe 1 erfolgt mittels eines Führungsteils 6.

Der erste Planschlitten 2 weist einen Führungsbereich 2.1 auf, von dem ein abgewinkelter Arm 2.2 in Richtung zum zweiten Planschlitten 3 reicht. An dem abgewinkelten Arm 2.2 sind radial außen eine erste Werkzeugaufnahme P1 für ein erstes Werkzeug und radial innen eine zweite Werkzeugaufnahme P2 für ein zweites Werkzeug vorgesehen. Spiegelbildlich zum ersten Planschlitten 2 ist der zweite Planschlitten 3 an der Planscheibe 1 mittels seines Führungsbereiches 3.1 gelagert. Der zweite Planschlitten 3 verfügt ebenfalls über einen in Richtung zum ersten Planschlitten 2 abgewinkelten Arm 3.2, an dem radial außen eine dritte Werkzeugaufnahme P3 für ein drittes Werkzeug und radial innen eine vierte Werkzeugaufnahme P4 für ein viertes Werkzeug vorgesehen sind. Verbindet man die Werkzeugaufnahmen P1 bis P4 mittels einer gedachten, hier gestrichelt dargestellten Linie L, so schneidet sich diese mit der Drehachse W. Obwohl die Längsachsen (U-Achsen) U außerhalb der Drehachse W liegen, ist somit sichergestellt, dass die Werkzeuge mit der Drehachse W fluchten und somit eine einfache Verstellung der Planschlitten 2 und 3 ohne Beachtung von Winkelfunktionen anhand des zu bearbeitenden Werkstückdurchmessers erfolgen kann.

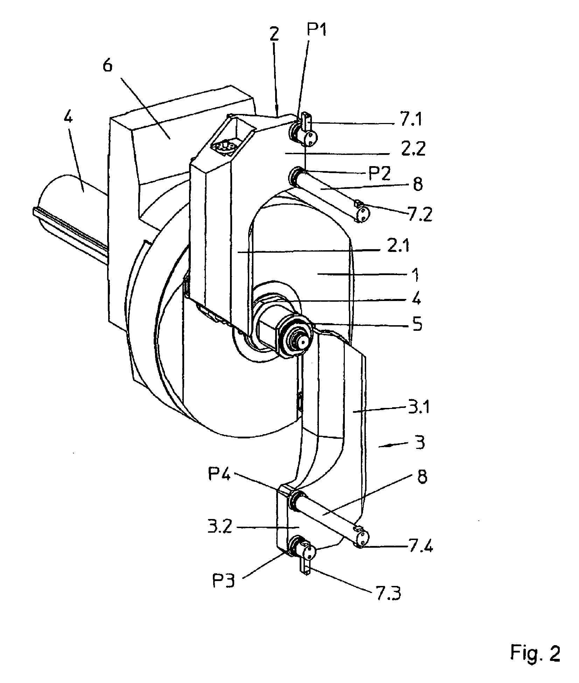

Fig. 2 zeigt eine dreidimensionale Darstellung der Einrichtung gem. Fig. 1, jedoch mit radial in eine äußere Endstellung ausgefahrenen ersten und zweiten Planschlitten 2, 3. Die Planschlitten 2, 3 wurden mittels ihrer Führungsbereiche 2.1, 3.1 zueinander entgegengesetzt und parallel entlang von Achsen U radial nach außen verfahren, so dass die Arme 2.2 und 3.2 über die Planscheibe 1 hinausragen.

In der Werkzeugaufnahme P1 des ersten Planschlittens 2 ist ein erstes Werkzeug 7.1 zur Bearbeitung einer Innenkontur und in der Werkzeugaufnahme P2 ein zweites Werkzeug 7.2 zur Bearbeitung einer Außenkontur aufgespannt.
Analog ist am zweiten Planschlitten 3 in der dritten Werkzeugaufnahme P3 ein drittes Werkzeug 7.3 zur Bearbeitung eines Innendurchmessers und in der vierten Werkzeugaufnahme P4 ein viertes Werkzeug 7.4 zur Bearbeitung eines Außendurchmessers aufgespannt. Die Werkzeuge 7.2 und 7.4 weisen dabei einen langen Schaft 8 auf, um eine Bearbeitung des Innendurchmessers zu gewährleisten.

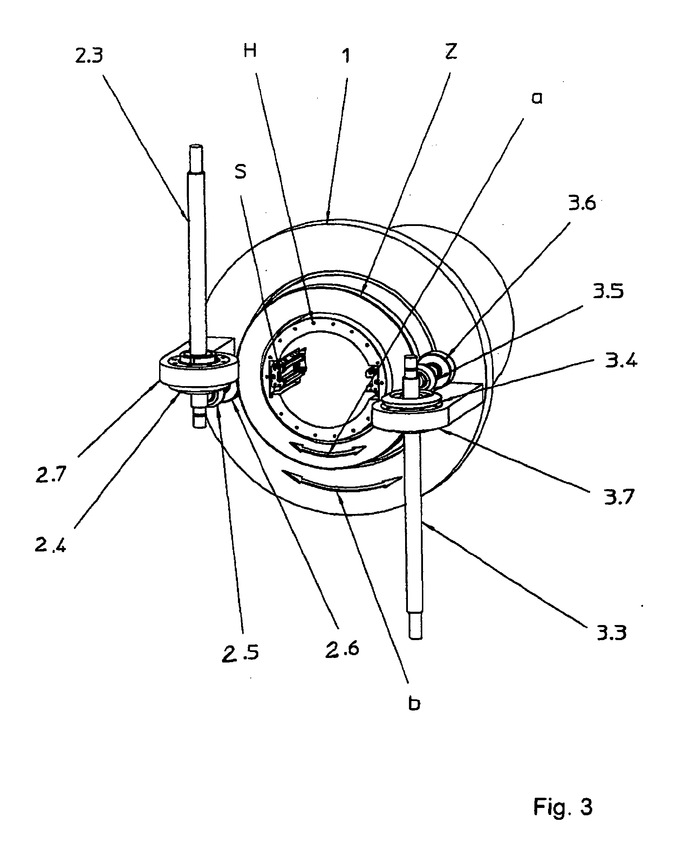

Die Fig. 3 zeigt eine dreidimensionale Darstellung der erfindungsgemäßen Einrichtung, bei welcher die Planschlitten 2, 3 nicht dargestellt sind. Dafür sind hier zwei, dem Antrieb der Planschlitten 2, 3 dienende Gewindespindeln (Kugelgewindespindeln) 2.3, 3.3 gezeigt, deren Längsachsen koaxial zu den Längsachsen U der Planschlitten 2, 3 verlaufen.
An dem Außendurchmesser der als drehfeste Hohlachse/Hohlnabe H in dem Führungsteil 6 ausgebildeten Drehachse W ist die Planscheibe 1 drehbar gelagert. Des Weiteren ist an dem Außendurchmesser der Hohlachse/Hohlnabe H ein Zahnkranz Z vorgesehen, der von einem hier nicht gezeigten Torque-Motor antreibbar ist.
Jede drehfest und axial verschiebbar angeordnete Kugelgewindespindel 2.3, 3.3 weist ein konzentrisch zu ihrer Längsachse angeordnetes Kegelrad 2.4, 3.4, welches von einer Kugelgewindemutter getragen wird, auf. Orthogonal zu der Planscheibe 1 und zu der Längsachse der Kugelgewindespindel 2.3, 3.2 angeordnet, greift an dem Kegelrad 2.4, 3.4 eine Kegelritzelwelle 2.5, 3.5 an. An letzterer wiederum ist drehfest ein Stirnritzel 2.6, 3.6 gelagert, welches mit dem an der Hohlachse/Hohlnabe H angeordneten Zahnkranz Z in Wirkverbindung steht. Die drehbare Kugelgewindemutter des Kegelrades 2.4, 3.4 weist einen Axial-Radial-Lagerbock 2.7, 3.7 auf, der an der Planscheibe 1 befestigt ist. Auch die Planscheibe 1 weist als Antrieb einen hier ebenfalls nicht dargestellten Torque-Motor auf. Beide Torque-Motoren - sowohl der dem Antrieb der Planscheibe 1 dienende als auch der zum Antrieb der Planschlitten 2, 3 eingesetzte - sind am Führungsteil 6 angeordnet und befinden sich vorzugsweise auf einer gemeinsamen Achse, die achsparallel zu der Drehachse W/Hohlnabe H verläuft.

Außerdem sind am Außenumfang des Querschiebers 4 in axialer Richtung verlaufende Kompaktführungsschienen vorgesehen, auf denen jeweils mindestens zwei, am Führungsteil 6 befestigte, Kompaktführungsschuhe S gelagert sind.

Des Weiteren sind die durch die Antriebe der Planscheibe 1 bzw. der Planschlitten 2, 3 hervorgerufenen Drehbewegungen in Form der Doppelpfeile a, b gezeigt, wobei der Doppelpfeil a die Drehbewegung des Zahnkranzes Z und der Doppelpfeil b die Drehbewegung der Planscheibe 1 darstellt. Über den Axial-Radial-Lagerbock 2.7, 3.7 besteht eine drehfeste Verbindung der Kugelgewindespindel 2.3, 3.3 mit der Planscheibe 1, während über das Stirnritzel 2.6, 3.6 eine Verbindung der Kugelgewindespindel 2.3, 3.3 mit dem Zahnkranz Z vorhanden ist. Somit wird eine relative Drehbeweglichkeit von Planscheibe 1 und Zahnkranz Z ermöglicht. Dabei findet eine gleichgerichtete Drehbewegung der beiden Antriebe statt, wobei bei unterschiedlichen Drehzahlen eine Verstellung der Planschlitten 2, 3 über die drehende Kugelgewindemutter und die sich nicht drehenden Kugelgewindespindeln 2.3, 3.3 erfolgt. Über die Kugelgewindespindeln 2.3, 3.3 wird somit eine Bewegung der Planschlitten 2, 3 entlang der Längsachse U verwirklicht.
Die Planschlitten 2, 3 sind somit sowohl auf der Planscheibe 1 radial verschiebbar als auch mit der Planscheibe 1 drehbar.
Die verwendeten Kugelgewindespindeln 2.3, 3.3 sind abdichtbar und somit relativ schmutzunempfindlich.

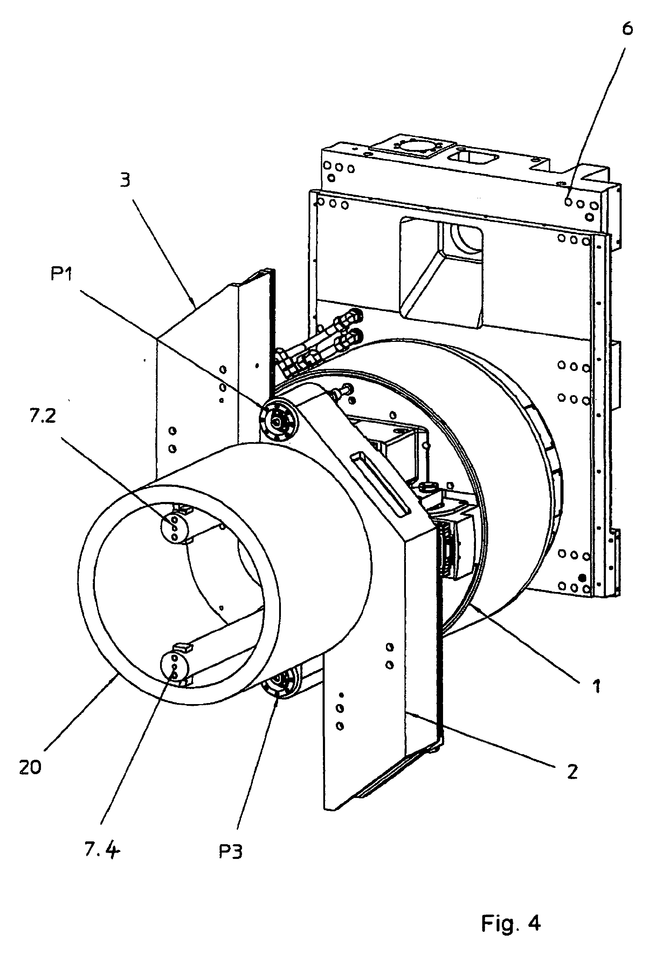

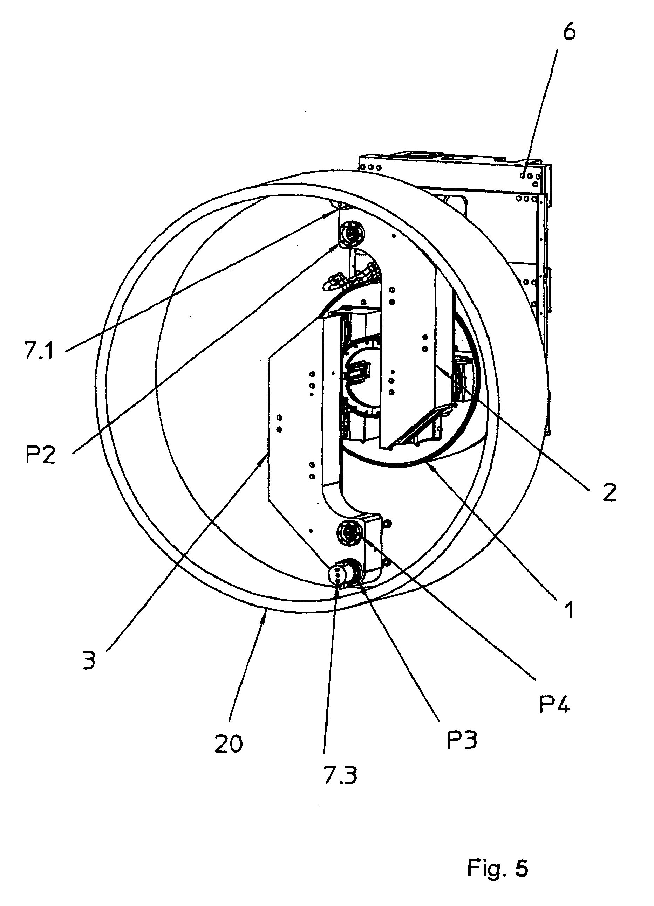

In Fig. 4 ist die erfindungsgemäße Einrichtung bei der Bearbeitung eines relativ kleinen Innendurchmessers des Werkstücks 20 dargestellt. Dabei sind die Werkzeuge 7.2, 7.4 in der jeweils radial innen befindlichen zweiten bzw. vierten Werkzeugaufnahme P2, P4 des Planschlittens 2 bzw. des Planschlittens 3 aufgenommen. Die Befestigung an einem Bearbeitungszentrum ist hier ebenso wie in den folgenden Fig. 5 bis Fig. 10 nur angedeutet.

Fig. 5 zeigt die Bearbeitung eines großen Innendurchmessers des Werkstücks 20. Hier sind die jeweils äußeren Werkzeugaufnahmen P1, P3 mit den zur Bearbeitung vorgesehenen Werkzeugen 7.1, 7.2 der beiden an der Planscheibe 1 befestigten Planschlitten 2, 3 bestückt. Die Planschlitten 2, 3 befinden sich in ihrer radial äußeren Endstellung.

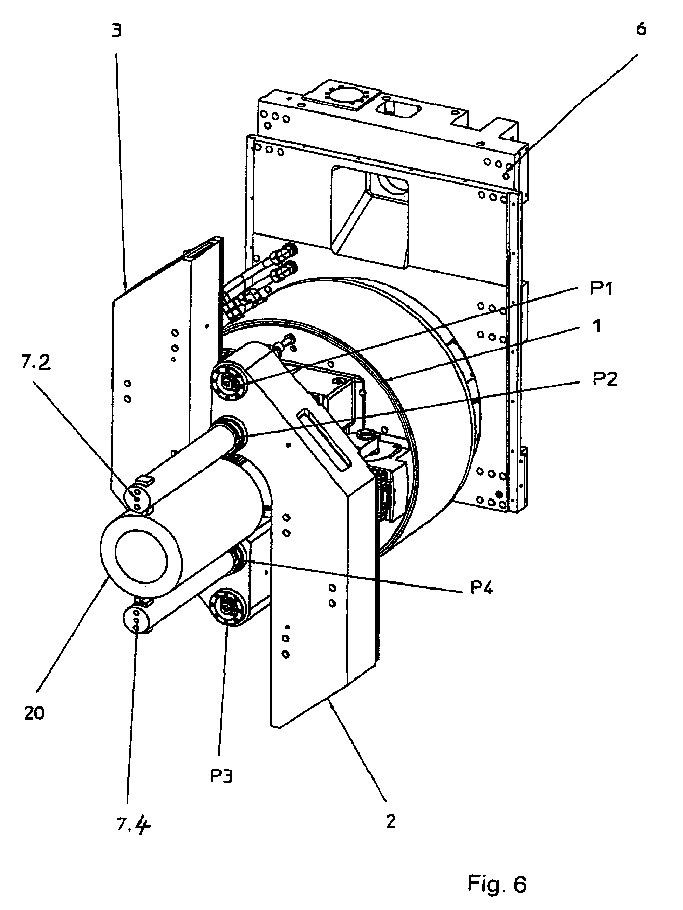

In Fig. 6 findet die Bearbeitung kleiner Außendurchmesser durch die in den radial innen angeordneten Werkzeugaufnahmen P2, P4 der Planschlitten 2, 3 eingespannten Werkzeuge 7.2, 7.4 statt. Die langen Schäfte 8 der Werkzeuge 7.2, 7.4 ermöglichen eine Bearbeitung des Außenumfangs des Werkstücks 20 mit einer relativ großen axialen Länge. Die Planschlitten 2, 3 befinden sich in ihrer radial inneren Endstellung.

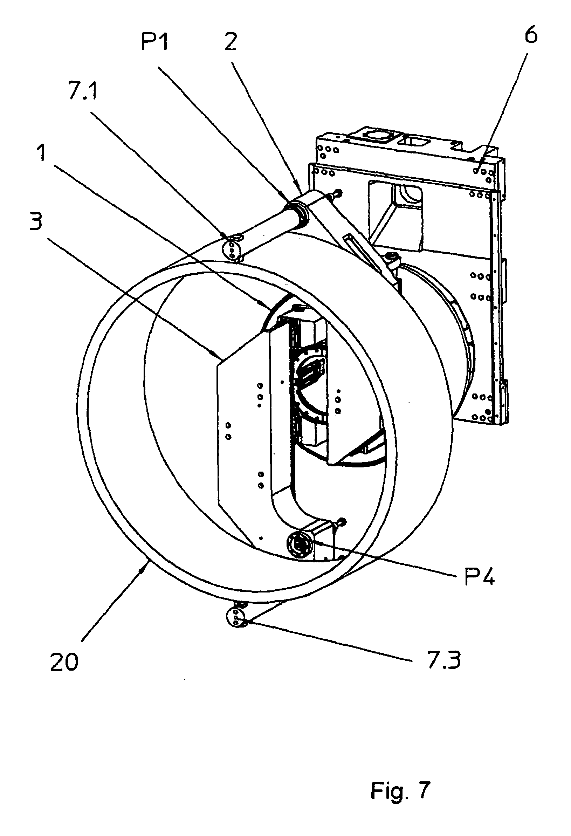

In Fig. 7 ist die Bearbeitung eines großen Außendurchmessers des Werkstücks 20 dargestellt. Es kommen wieder die in den jeweils radial außen angeordneten Werkzeugaufnahmen P1, P3 befindlichen Werkzeuge 7.1, 7.3 zum Einsatz, wobei die Werkzeuge 7.1, 7.3 hier ebenfalls den langen Schaft 8 aufweisen. Die Planschlitten 2, 3 befinden sich in ihrer radial äußeren Endstellung.

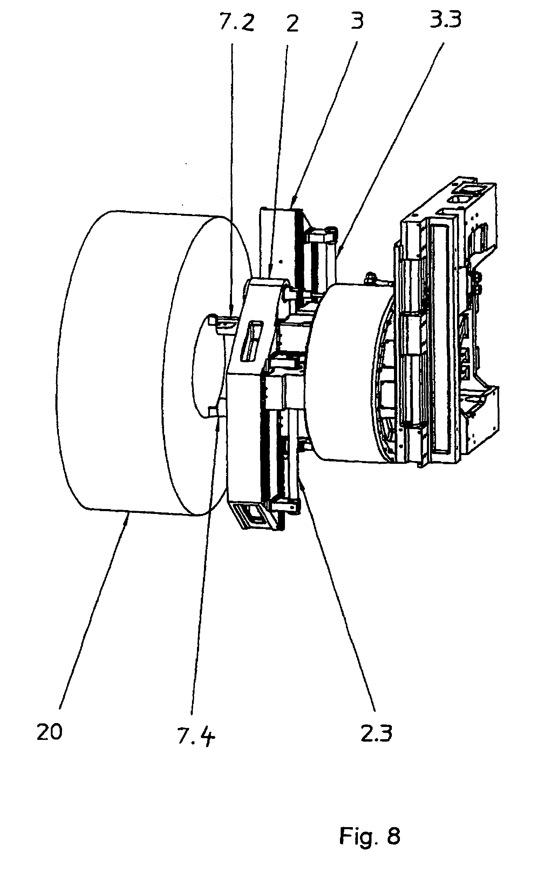

Gemäß Fig. 8 findet mit der erfindungsgemäßen Einrichtung die konzentrische Bearbeitung kleiner Planflächen statt. Dementsprechend kommen hier wieder die innen liegenden Werkzeugaufnahmen P2, P4 mit den Werkzeugen 7.2, 7.4 zum Einsatz. Gut zu erkennen sind hier die Kugelgewindespindeln 2.3, 3.3, die Teil des Antriebs der Planschlitten 2, 3 sind, sowie die sich in ihrer radial inneren Endstellung befindlichen Planschlitten 2, 3.

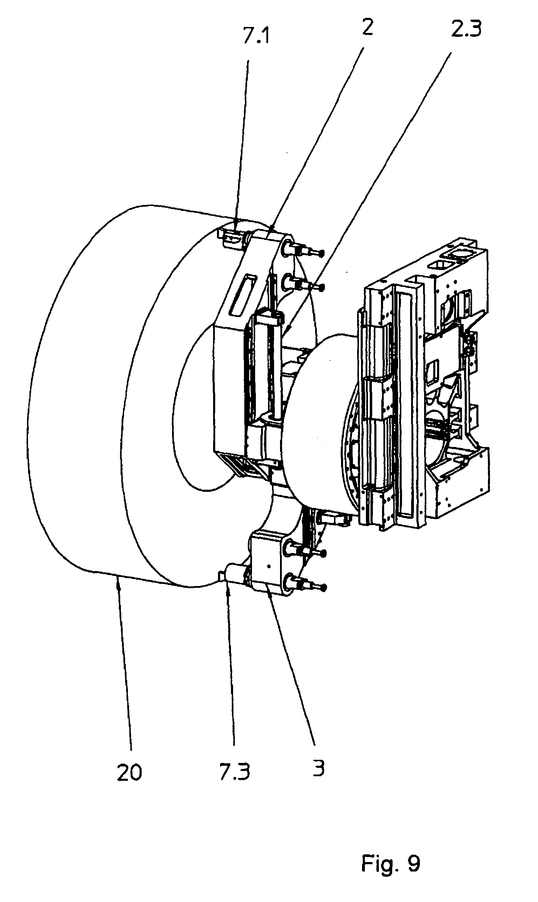

Fig. 9 wiederum zeigt die konzentrische Bearbeitung großer Planflächen, wobei die Werkzeuge 7.1, 7.3 in den äußeren Werkzeugaufnahmen P1, P3 der Planschlitten 2, 3 angeordnet sind. Die Planschlitten 2, 3 befinden sich radial in einer äußeren Endstellung, wodurch auch die Werkzeuge 7.1, 7.3 nahe am Außendurchmesser des Werkstücks 20 liegen. Es ist hier die an dem Planschieber 2 befestigte Kugelgewindespindel 2.3 gut sichtbar.

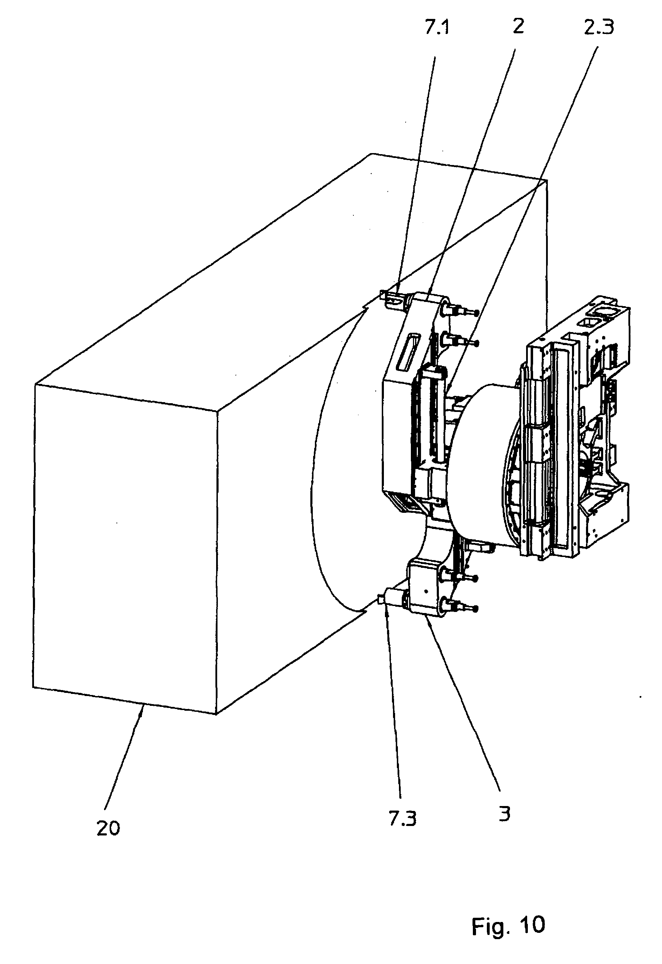

In Fig. 10 ist schließlich das Planfräsen mit der erfindungsgemäßen Einrichtung dargestellt. Da es sich um eine relativ große zu bearbeitende Fläche handelt, befinden sich die Planschlitten 2, 3 auch hier in ihrer radial äußeren Endstellung. Die Werkzeuge 7.1, 7. 3 sind in den Werkzeugaufnahmen P1, P3 eingespannt.

Bei Beaufschlagung der Antriebe von Planscheibe 1 und Planschlitten 2, 3 erfolgen Drehbewegungen von Planscheibe 1 und dem mit den Planschlitten 2, 3 in Wirkverbindung stehenden Zahnkranz Z in die gleiche Drehrichtung. Sobald sich die Drehzahlen der beiden Antriebe unterscheiden, erfolgt eine Verstellbewegung der Planschlitten 2, 3, d. h. eine Bewegung der Planschlitten 2, 3 entlang der Kugelgewindespindeln 2.3, 3.3 und somit entlang der Längsachsen U. Durch die Verstellung der Planschlitten 2, 3 entstehen auf der Oberfläche des Werkstücks 20 zirkular umlaufende Riefen, die beispielsweise für die Abdichtung von Flanschverbindungen vorteilhaft sind. Somit kann mit der erfindungsgemäßen Einrichtung bei der Planflächenbearbeitung eine verbesserte Oberflächenbeschaffenheit erzielt werden.

Fig. 11 zeigt in dreidimensionaler Ansicht ein Waagerecht-Bearbeitungszentrum 9 mit der erfindungsgemäßen Einrichtung, die an dem Ständer 10 des Waagerecht-Bearbeitungszentrums 9 angeordnet ist, vor der Bearbeitung.

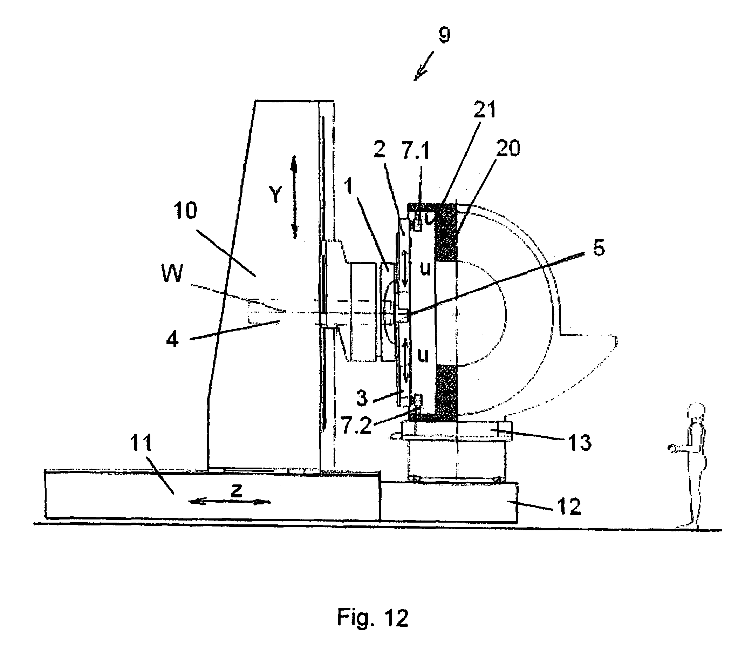

Fig. 12 zeigt das Waagerecht-Bearbeitungszentrum 9 während der Bearbeitung in der Seitenansicht. Der Ständer 10 ist entlang einer Z-Achse Z auf dem Z-Bett 11 verfahrbar angeordnet. An dem Ständer 10 ist die erfindungsgemäße Einrichtung mittels des Führungsteils 6 an zwei Linearführungen 10.1 in einer Y-Achse Y vertikal verstellbar befestigt. An das Z-Bett 11 schließt sich ein quer dazu in einer X-Achse X ausgerichtetes X-Bett 12 an, auf welchem ein NC-Drehtisch 13 angeordnet ist, der ein Werkstück 20 aufnimmt, welches mittels nicht näher dargestellter Spannmittel auf dem NC-Drehtisch 13 aufgespannt ist.

Das Werkstück 20 weist eine Bohrung 21 auf, die mittels des am ersten Planschlitten 2 aufgespannten ersten Werkzeuges 7.1 und mittels des am zweiten Planschlitten 3 aufgespannten dritten Werkzeuges 7.3 ausgedreht werden soll. Dazu fährt der Ständer 10 entlang der Z-Achse Z auf dem Z-Bett 11 in Richtung zum Werkstück 20 (Fig. 12). Es erfolgt mit nicht dargestellten Messmitteln das Ausmessen der Bohrung 21, um die Bohrungsmitte zu bestimmen. Dann werden die Planscheibe 1 und/oder das Werkstück 20 derart zueinander ausgerichtet, dass die Drehachse W der Planscheibe 1 mit der Bohrungsmitte fluchtet. Nun wird die Planscheibe 1 in Rotation versetzt und mittels des Ständers 10 eine Vorschubbewegung vollführt, wodurch die Werkzeuge 7.1, 7.3 in die Bohrung 21 eintauchen und diese bearbeiten (Fig. 12). Da hier ein großer Durchmesser zu bearbeiten ist, befinden sich die Planschlitten 2, 3 im Wesentlichen in ihrer außen liegenden Endstellung.

Der Querschieber 4 ist in der Planscheibe 1 axial verschiebbar in der als Hohlachse/Hohlnabe H ausgebildeten Drehachse W gelagert. Im Querschieber 4 sitzt die Arbeitsspindel 5. Der Querschieber 4 und die Arbeitsspindel 5 stehen in Richtung zum Werkstück 20 nicht über die Planschlitten 2, 3 hinaus. Dabei kann die Arbeitsspindel 5 in dem Querschieber 4 eingeflanscht sein und ist entlang der Drehachse W linear beweglich.

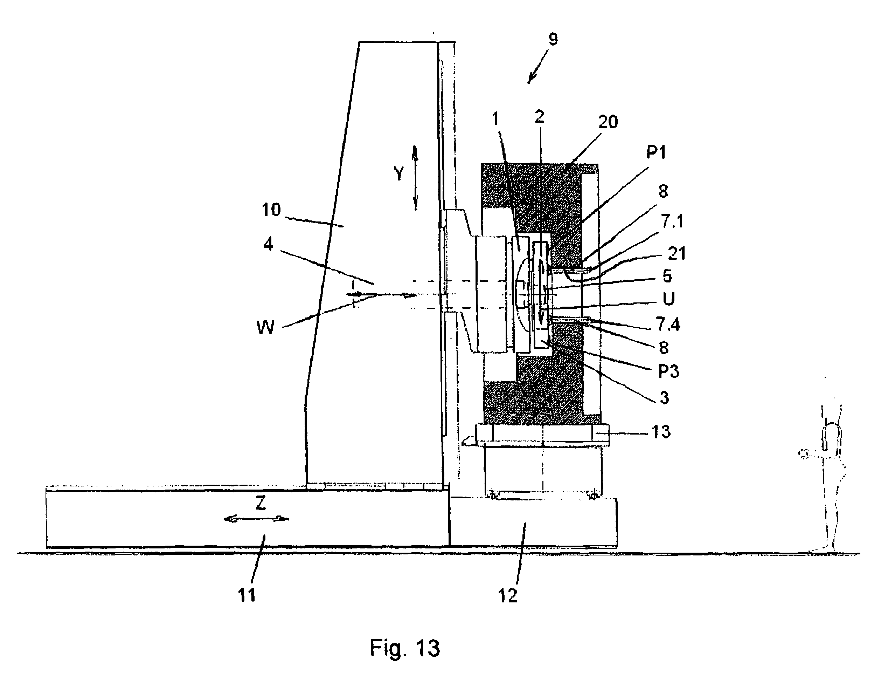

In Fig. 13 ist eine Seitenansicht des Bearbeitungszentrums 9 gem. Fig.12, jedoch mit einer zur Bearbeitung eines kleinen Innendurchmessers ausgerüsteten Einrichtung, bei Abschluss der Bearbeitung dargestellt.

Die beiden Planschlitten 2 und 3 befinden sich hier im Wesentlichen in einer radial innen liegenden Position. Die äußeren Werkzeugaufnahmen P1 und P3 sind frei und nur die innen liegenden Werkzeugaufnahmen P2 und P4 mit einem zweiten Werkzeug 7.2 und einem vierten Werkzeug 7.4 bestückt, wobei die Werkzeuge 7.2, 7.4 zur Bearbeitung eines Innendurchmessers ausgebildet und ausgerichtet sind.
Die Länge des Schaftes 8 der Werkzeuge 7.2, 7.4 ist so dimensioniert, dass die Werkzeuge 7.2, 7.4 die gesamte Länge der Bohrung 21 des Werkstücks 20 bearbeiten können. Auch hier befinden sich Querschieber 4 und Arbeitsspindel 5 in einer Position, in der sie die Planschlitten 2, 3 nicht überragen.

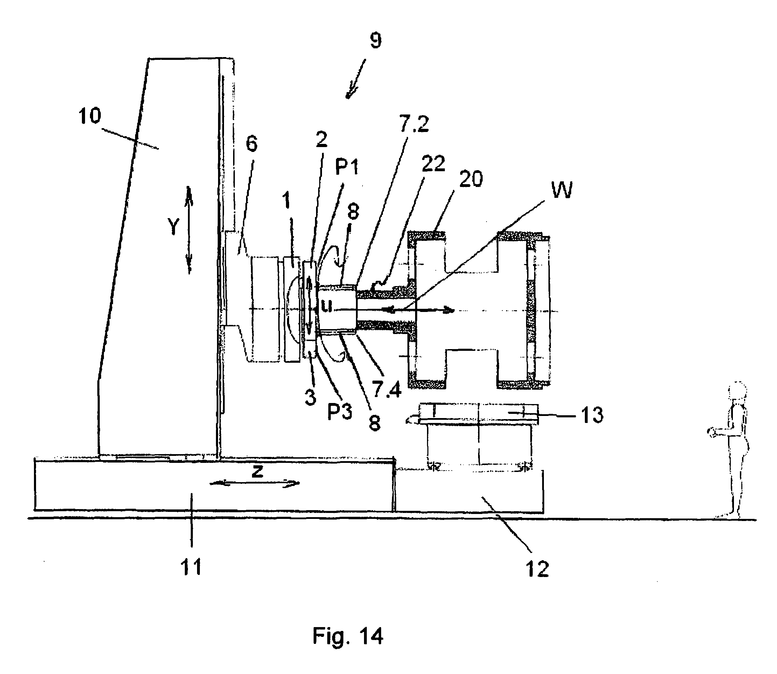

Fig. 14 zeigt die Seitenansicht des Bearbeitungszentrums 9 mit einer Einrichtung zur Bearbeitung eines relativ kleinen Außendurchmessers 22 eines Werkstückes 20. Auch hier sind wie in Fig. 13 nur die innen liegenden Werkzeugaufnahmen P2 und P4 mit einem zweiten Werkzeug 7.2 und einem vierten Werkzeug 7.4 bestückt, jedoch sind die Werkzeuge 7.2, 7.4 so ausgebildet und ausgerichtet, dass sie eine Bearbeitung des Außendurchmessers 22 gewährleisten. Auch hier weisen die Werkzeuge 7.2, 7.4 einen langen Schaft 8 auf, so dass die gesamte Durchmesserlänge bearbeitbar ist.

Gemäß einem nicht dargestellten Ausführungsbeispiel können auch die Werkzeugaufnahmen P1, P3 mit Werkzeugen zur Bearbeitung großer Außendurchmesser ausgerüstet sein.
Ebenfalls nicht näher dargestellt ist die Möglichkeit, bevorzugt in Bearbeitungsrichtung zuerst ein Schruppwerkzeug (z.B. in Form des ersten oder zweiten Werkzeuges und nachfolgend ein Schlichtwerkzeug (in Form des dritten oder vierten Werkzeuges) vorzusehen, so dass erst ein Schruppen und dann ein Schlichten während eines Bearbeitungsvorganges erfolgt und somit eine qualitativ hochwertige gedrehte Oberfläche erzielt wird.

Durch die flexible Zustellbarkeit der Planschlitten 2, 3 während der Bearbeitung ist es möglich, unrunde Konturen sowie kegelförmige Außen- und Innenkonturen zu bearbeiten.
Außerdem ermöglicht die relative Drehbeweglichkeit des Antriebes der Planschieber 2, 3 und der Planscheibe 1 zueinander eine genaue Verstellung der Planschlitten 2, 3 und somit eine höhere Genauigkeit bei der Bearbeitung von Werkstücken 20.
Vorteilhaft an der erfindungsgemäßen Einrichtung ist zudem ihre vielseitige Einsetzbarkeit. Sie kann sowohl zur Bearbeitung von Außen- und Innenkonturen als auch zur Planflächenbearbeitung Verwendung finden.

### Bezugszeichenliste

- 1: Planscheibe
- 2: erster Planschlitten
- 2.1: Führungsbereich des ersten Planschlittens
- 2.2: Arm des ersten Planschlittens
- 2.3: Gewindespindel
- 2.4: Kegelrad
- 2.5: Kegelritzelwelle
- 2.6: Stirnritzel
- 2.7: Axial-Radial-Lagerbock
- 3: zweiter Planschlitten
- 3.1: Führungsbereich des zweiten Planschlittens
- 3.2: Arm des zweiten Planschlittens
- 3.3: Gewindespindel
- 3.4: Kegelrad
- 3.5: Kegelritzelwelle
- 3.6: Stirnritzel
- 3.7: Axial-Radial-Lagerbock
- 4: Querschieber
- 5: Arbeitsspindel
- 6: Führungsteil
- 7.1: erstes Werkzeug
- 7.2: zweites Werkzeug
- 7.3: drittes Werkzeug
- 7.4: viertes Werkzeug
- 8: Schaft
- 9: Waagerecht-Bearbeitungszentrum
- 10: Ständer
- 11: Z-Bett
- 12: X-Bett
- 13: NC-Drehtisch
- 20: Werkstück
- 21: Bohrung
- 22: Außendurchmesser
- P1: erste Werkzeugaufnahme
- P2: zweite Werkzeugaufnahme
- P3: dritte Werkzeugaufnahme
- P4: vierte Werkzeugaufnahme
- H: Hohlachse/Hohlnabe
- S: Kompaktführungsschuhe
- Z: Zahnkranz
- L: gedachte Verbindungslinie
- U: U-Achse
- W: Drehachse
- X: X-Achse
- Y: Y-Achse
- Z: Z-Achse
- a: Drehbewegung Zahnkranz
- b: Drehbewegung Planscheibe

## Patentansprüche

1. Einrichtung zur Bearbeitung von Werkstücken, wobei eine um eine Drehachse (W) antreibbare Planscheibe (1) entlang der Drehachse (W) linear bewegbar ist, und an der Planscheibe (1) zwei jeweils senkrecht zu der Drehachse (W) radial nach außen und innen verschiebbare Planschlitten (2, 3) vorgesehen sind, wobei die Planscheibe (1) von einem ersten Antrieb und die Planschlitten (2, 3) von einem gemeinsamen zweiten Antrieb antreibbar sind, **dadurch gekennzeichnet, dass** die Drehachse (W) als Hohlachse (H) ausgebildet ist, auf deren Außendurchmesser die Planscheibe (1) drehbar gelagert ist.

2. Einrichtung nach Anspruch 1, **dadurch gekennzeichnet, dass** der Antrieb der Planschlitten (2, 3) und die Planscheibe (1) eine relative Drehbeweglichkeit zueinander aufweisen.

3. Einrichtung nach Anspruch 1 oder 2, **dadurch gekennzeichnet, dass** die Planscheibe (1) von einem ersten Torque-Motor und die Planschlitten (2, 3) von einem zweiten Torque-Motor antreibbar sind.

4. Einrichtung nach Anspruch 3, **dadurch gekennzeichnet, dass** die beiden Torque-Motoren auf einer gemeinsamen Achse angeordnet sind.

5. Einrichtung nach einem der Ansprüche 1 bis 4, **dadurch gekennzeichnet, dass** über eine zwischen der Drehzahl des Antriebs der Planscheibe (1) und der Drehzahl des Antriebs der Planschlitten (2, 3) bestehende Differenz eine Verstellung der Planschlitten (2, 3) erzielbar ist.

6. Einrichtung nach einem der Ansprüche 1 bis 5, **dadurch gekennzeichnet, dass** die beiden Planschlitten (2, 3) parallel und zueinander entgegengesetzt radial verstellbar gelagert sind.

7. Einrichtung nach einem der Ansprüche 1 bis 6, **dadurch gekennzeichnet, dass** an dem ersten Planschlitten (2) ein erstes Werkzeug (7.1) und/oder ein zweites Werkzeug (7.2) und an dem zweiten Planschlitten (3) ein drittes Werkzeug (7.3) und/oder ein viertes Werkzeug (7.4) befestigt sind, wobei eine gedachte Verbindungslinie (L) zwischen dem ersten Werkzeug (7.1) und dem dritten Werkzeug (7.3) sowie eine gedachte Verbindungslinie (L) zwischen dem zweiten Werkzeug (7.2) und dem vierten Werkzeug (7.4) durch die Drehachse (W) führt.

8. Einrichtung nach Anspruch 7, **dadurch gekennzeichnet, dass** der erste Planschlitten (2) und der zweite Planschlitten (3) zueinander parallel angeordnete Führungsbereiche (2.1, 3.1) aufweisen, und dass vom Führungsbereich (2.1) des ersten Planschlittens (2) in Richtung zum zweiten Planschlitten (3) ein abgewinkelter Arm (2.2) reicht, an dem das erste und/oder das zweite Werkzeug (7.1, 7.2) befestigt ist/sind, und dass vom Führungsbereich (3.1) des zweiten Planschlittens (3) in Richtung zum ersten Planschlitten (2) ein abgewinkelter Arm (3.2) reicht, an dem das dritte und/oder das vierte Werkzeug (7.3, 7.4) befestigt ist/sind.

9. Einrichtung nach einem der Ansprüche 1 bis 8, **dadurch gekennzeichnet, dass** ein Querschieber (4) innerhalb der Planscheibe (1) entlang der Drehachse (W) linear bewegbar ist.

10. Einrichtung nach einem der Ansprüche 1 bis 9, **dadurch gekennzeichnet, dass** sie an einem Ständer (10) eines Waagerecht-Bearbeitungszentrums (9) in einer Y-Achse (Y) vertikal verschiebbar angeordnet ist, wobei die Drehachse (W) horizontal und parallel zu einer Z-Achse (Z) eines Z-Bettes (11) ausgerichtet ist und mit dem Ständer (10) entlang der Z-Achse (Z) auf dem Z-Bett (11) verschiebbar ist.

11. Einrichtung nach Anspruch 9 oder 10, **dadurch gekennzeichnet, dass** eine Arbeitsspindel (5) des Waagerecht-Bearbeitungszentrums (9) durch den Querschieber (4) und die Planscheibe (1) ragt/reicht, wobei die Achse der Arbeitsspindel (5) in der Drehachse (W) der Planscheibe (1) liegt.

12. Einrichtung nach Anspruch 11, **dadurch gekennzeichnet, dass** die Planscheibe (1) und die Arbeitsspindel (5) separate Antriebe aufweisen und die Arbeitsspindel (5) entlang der Drehachse (W) linear bewegbar ist.

13. Einrichtung nach Anspruch 11 oder 12, **dadurch gekennzeichnet, dass** die Arbeitsspindel (5) zu einer Fräsbearbeitung des Werkstücks (20) bis über die Planscheibe (1) in Richtung zum Werkstück (20) bewegbar ist.

14. Einrichtung nach einem der Ansprüche 1 bis 13, **dadurch gekennzeichnet, dass** der/die Planschlitten (2, 3) während der Drehbearbeitung radial verstellbar an der Planscheibe (1) angeordnet sind.

15. Einrichtung nach einem der Ansprüche 9 bis 14, **dadurch gekennzeichnet, dass** die entlang von Achsen (U) bewegbaren Planschlitten (2, 3) beidseitig zum Querschieber (4) angeordnet sind und außerhalb der Drehachse (W) der Planscheibe (1) liegen.

## Claims

1. A device for machining workpieces, wherein a surface plate (1) that can be driven about a rotational axis (W) can be moved linearly along the rotational axis (W), and two cross slides (2, 3) are provided on said surface plate (1), each of which can be displaced radially outward and inward perpendicular to the rotational axis (W), wherein the surface plate (1) can be driven by a first drive, and the cross slides (2, 3) can be driven by a common second drive, **characterized in that** the rotational axis (W) is formed as a hollow axis (H), on the outer diameter of which the surface plate (1) is rotatably mounted.

2. The device according to claim 1, **characterized in that** the drive of the cross slides (2, 3) and the surface plate (1) have a relative rotational mobility with respect to each other.

3. The device according to claim 1 or claim 2, **characterized in that** the surface plate (1) can be driven by a first torque motor and the cross slides (2, 3) can be driven by a second torque motor.

4. The device according to claim 3, **characterized in that** the two torque motors are arranged on a common axis.

5. The device according to any one of the claims 1 to 4, **characterized in that** adjusting the cross-slides (2, 3) can be achieved via a difference existing between the speed of the drive of the surface plate (1) and the speed of the drive of the cross slides (2, 3).

6. The device according to any one of the claims 1 to 5, **characterized in that** the two cross slides (2, 3) are mounted in such a manner that they can be radially adjusted parallel and in the opposite direction to each other.

7. The device according to any one of the claims 1 to 6, **characterized in that** a first tool (7.1) and/or a second tool (7.2) are/is fastened to the first cross slide (2), and a third tool(7.3) and/or a fourth tool (7.4) are/is fastened to the second cross slide (3), wherein an imaginary connecting line (L) between the first tool (7.1) and the third tool (7.3) and an imaginary connecting line (L) between the second tool (7.2) and the fourth tool (7.4) pass through the rotational axis (W).

8. The device according to claim 7, **characterized in that** the first cross slide (2) and the second cross slide (3) have guide regions (2.1, 3.1) arranged parallel to one another, and that an angled arm (2.2) on which the first and/or the second tool (7.1, 7.2) are/is fastened extends from the guide region (2.1) of the first cross slide (2) in the direction toward the second cross slide (3), and that an angled arm (3.2) on which the third and/or the fourth tool (7.3, 7.4) are/is fastened extends from the guide region (3.1) of the second cross slide (3) in the direction toward the first cross slide (2).

9. The device according to any one of the claims 1 to 8, **characterized in that** a cross slider (4) is linearly movable inside the surface plate (1) along the rotational axis (W).

10. The device according to any one of the claims 1 to 9, **characterized in that** said device is arranged on a stand (10) of a horizontal machining center (9) and is vertically displaceable along a Y-axis (Y), wherein the rotational axis (W) is aligned horizontally and parallel to a Z-axis (Z) of a Z bed (11) and is displaceable along the Z-axis (Z) on the Z bed (11) by means of said stand (10).

11. The device according to claim 9 or claim 10, **characterized in that** a working spindle (5) of the horizontal machining center (9) projects/extends through the cross slider (4) and the surface plate (1), wherein the axis of the working spindle (5) lies in the rotational axis (W) of the surface plate (1).

12. The device according to claim 11, **characterized in that** the surface plate (1) and the working spindle (5) have separate drives and the working spindle (5) is linearly movable along the rotational axis (W).

13. The device according to claim 11 or claim 12, **characterized in that** for milling the workpiece (20), the working spindle (5) can be moved beyond the surface plate (1) in the direction toward the workpiece (20).

14. The device according to any one of the claims 1 to 13, **characterized in that** the cross slide/slides (2, 3) is/are arranged radially adjustable on the surface plate (10) during the turning operation.

15. The device according to any one of the claims 9 to 14, **characterized in that** the cross slides (2, 3) that are movable along axes (U) are arranged on both sides of the cross slider (4) and lie outside of the rotational axis (W) of the surface plate (1).

## Revendications

1. Dispositif destiné à l'usinage de pièces, dans lequel un plateau circulaire (1) pouvant être entraîné autour d'un axe de rotation (W) peut être déplacé linéairement le long de l'axe de rotation (W) et dans lequel il est prévu sur le plateau circulaire (1) deux chariots transversaux (2, 3) pouvant se déplacer chacun perpendiculairement à l'axe de rotation (W), dans la direction radiale vers l'intérieur et vers l'extérieur, le plateau circulaire (1) pouvant être entraîné par un premier mécanisme d'entraînement et les chariots transversaux (2, 3), par un deuxième mécanisme d'entraînement commun, **caractérisé en ce que** l'axe de rotation (W) prend la forme d'un arbre creux (H) sur le diamètre extérieur duquel le plateau circulaire (1) est monté rotatif.

2. Dispositif selon la revendication 1, **caractérisé en ce que** le mécanisme d'entraînement des chariots transversaux (2, 3) et le plateau circulaire (1) peuvent effectuer un mouvement de rotation relatif l'un par rapport à l'autre.

3. Dispositif selon l'une des revendications 1 ou 2, **caractérisé en ce que** le plateau circulaire (1) peut être entraîné par un premier moteur couple et les chariots transversaux (2, 3) par un deuxième moteur couple.

4. Dispositif selon la revendication 3, **caractérisé en ce que** les deux moteurs couple sont disposés sur un axe commun.

5. Dispositif selon l'une des revendications 1 à 4, **caractérisé en ce que** l'on peut obtenir un déplacement des chariots transversaux (2, 3) grâce à une différence existant entre la vitesse de rotation du mécanisme d'entraînement du plateau circulaire (1) et la vitesse de rotation du mécanisme d'entraînement des chariots transversaux (2, 3).

6. Dispositif selon l'une des revendications 1 à 5, **caractérisé en ce que** les deux chariots transversaux (2, 3) sont montés de manière à pouvoir se déplacer l'un par rapport à l'autre, parallèlement et dans des directions radiales opposées.

7. Dispositif selon l'une des revendications 1 à 6, **caractérisé en ce que** sont fixés sur le premier chariot transversal (2) un premier outil (7.1) et/ou un deuxième outil (7.2) et sur le deuxième chariot transversal (3) un troisième outil (7.3) et/ou un quatrième outil (7.4), une droite de liaison imaginaire (L) entre le premier outil (7.1) et le troisième outil (7.3) et une droite de liaison imaginaire (L) entre le deuxième outil (7.2) et le quatrième outil (7.4) passant par l'axe de rotation (W).

8. Dispositif selon la revendication 7, **caractérisé en ce que** le premier chariot transversal (2) et le deuxième chariot transversal (3) possèdent des zones de guidage (2.1, 3.1) parallèles entre elles, **en ce que** la zone de guidage (2.1) du premier chariot transversal (2) se poursuit en direction du deuxième chariot transversal (3) par un bras coudé (2.2) sur lequel sont fixés le premier outil (7.1) et/ou le deuxième outil (7.2) et **en ce que** la zone de guidage (3.1) du deuxième chariot transversal (3) se poursuit en direction du premier chariot transversal (2) par un bras coudé (3.2) sur lequel sont fixés le troisième outil (7.3) et/ou le quatrième outil (7.3, 7.4).

9. Dispositif selon l'une des revendications 1 à 8, **caractérisé en ce qu'**un coulisseau transversal (4) est apte à se déplacer linéairement à l'intérieur du plateau circulaire (1) le long de l'axe de rotation (W).

10. Dispositif selon l'une des revendications 1 à 9, **caractérisé en ce qu'**il est monté déplaçable verticalement selon un axe Y (Y) d'un centre d'usinage horizontal (9), l'axe de rotation (W) étant horizontal et parallèle à un axe Z (Z) d'un plateau Z (11) et étant apte à se déplacer avec le montant (10) le long de l'axe Z (S) sur le plateau Z (11).

11. Dispositif selon l'une des revendications 9 ou 10, **caractérisé en ce qu'**une broche de travail (5) du centre d'usinage horizontal (9) traverse/passe à travers le coulisseau transversal (4) et le plateau circulaire (1), l'axe de la broche de travail (5) se situant selon l'axe de rotation (W) du plateau circulaire (1).

12. Dispositif selon la revendication 11, **caractérisé en ce que** le plateau circulaire (1) et la broche de travail (5) possèdent des mécanismes d'entraînement séparés et **en ce que** la broche de travail (5) est apte à se déplacer linéairement le long de l'axe de rotation (W).

13. Dispositif selon l'une des revendications 11 ou 12, **caractérisé en ce que** la broche de travail (5), pour un fraisage de la pièce (20), étant apte à se déplacer en direction de la pièce (20) en dépassant le plateau circulaire (1).

14. Dispositif selon l'une des revendications 1 à 13, **caractérisé en ce que** le ou les chariots transversaux (2, 3), pendant le tournage, sont montés en pouvant se déplacer radialement sur le plateau circulaire (1).

15. Dispositif selon l'une des revendications 9 à 14, **caractérisé en ce que** les chariots transversaux (2, 3) pouvant se déplacer le long des axes (U) sont disposés de part et d'autre du coulisseau transversal (4) et se situent en dehors de l'axe de rotation (W) du plateau circulaire (1).
